# NEUE EUROPÄISCHE PATENTSCHRIFT

(11) **EP 0 469 391 B2**
(45) Veröffentlichungstag und Bekanntmachung des Hinweises auf die Entscheidung über den Einspruch: **08.10.1997**
(45) Hinweis auf die Patenterteilung: 20.10.1993
(21) Anmeldenummer: 91111935.2
(22) Anmeldetag: 16.07.1991
(51) Int. Cl.: F16K 11/074, G05D 7/01

(54) **Sanitärarmatur**
Sanitary armature
Armature sanitaire

(30) Priorität: 28.07.1990 DE 4023988
(43) Veröffentlichungstag der Anmeldung: 05.02.1992
(73) Patentinhaber: IDEAL-STANDARD GMBH, D-53008 Bonn (DE)
(72) Erfinder: Koch, Wilhelm, W-5489 Bongard (DE)
(74) Vertreter: Gesthuysen, Hans Dieter, Dipl.-Ing.

(56) Entgegenhaltungen:
- EP-A- 0 115 342
- EP-A- 0 238 816
- DE-A- 3 208 530
- DE-A- 3 336 672
- DE-A- 3 531 935
- DE-A- 3 826 235
- DE-U-82 226 520
- DE-U-88 006 840
- FR-A- 1 367 650
- FR-A- 2 348 528
- Einbau- und Betriebsanleitung der Sanitärarmatur "Eurodisc 33 891" der Firma Friedrich Grohe Armaturenfabrik GmbH + Co.

## Beschreibung

Die Erfindung betrifft eine Sanitärarmatur mit einem ortsfest anbringbaren, Zulaufkanäle, einen Ausströmkanal und ggf. einen Ablaufkanal aufweisenden Armaturenkörper, mit einer auf den Armaturenkörper aufgeschobenen und gegenüber dem Armaturenkörper schwenkbaren Armaturenhülse, mit einem strömungstechnisch an den Ausströmkanal angeschlossenen, an der Armaturenhülse angeordneten und mit der Armaturenhülse schwenkbaren Auslaufarm - Schwenkarm - mit einem Auslaufmundstück und vorzugsweise am Auslaufmundstück einem Auslaufperlator und mit einer auf dem Armaturenkörper angebrachten, vorzugsweise als Einhebel-Kartusche ausgeführten Ventileinheit, wobei im Bereich des Ausströmkanals zwischen dem Armaturenkörper und der Armaturenhülse als Lippendichtungen ausgeführte Dichtringe angeordnet sind.

Sanitärarmaturen der in Rede stehenden Art sind seit langem bekannt. Sie werden dann, wenn der Auslaufarm als Schwenkarm ausgeführt ist, insbesondere im Küchenbereich gern eingesetzt, und zwar insbesondere in Form von Einhebel-Einloch-Mischbatterien. Bei der aus der Praxis bekannten Sanitärarmatur, von der die Erfindung ausgeht (vgl. die Einbau- und Betriebsanleitung der Sanitärarmatur "Eurodisc 33 891" der Firma Friedrich Grohe Armaturenfabrik GmbH + Co.), befinden sich zwischen dem in der Spüle verschraubten Armaturenkörper und der Armaturenhülse zwei umlaufende Lippendichtungen oberhalb und unterhalb eines in der Armaturenhülse umlaufenden Ausströmkanals. Auf dem Armaturenkörper durch Befestigungsschrauben fest angebraucht ist eine Ventileinheit in Form einer Einhebel-Kartusche. Zwischen der Ventileinheit und dem Armaturenkörper befindet sich ein oberer Lagerring; ein unterer Lagerring liegt auf einem unteren Ringflansch des Armaturenkörpers auf und ragt von dort zwischen den Armaturenkörper und die Armaturenhülse.

Dann, wenn am Auslaufmundstück ein Auslaufperlator angeordnet ist, wirkt dieser als Drosselstelle für den Wasserdurchfluß. Der Durchfluß durch den Auslaufperlator ist allerdings stark druckabhängig, was mitunter nicht besonders angenehm ist. Wird die Sanitärarmatur als Mischbatterie zusammen mit einem Niederdruck-Wassererhitzer betrieben, so bedarf es eines Druckminderers, um den Kaltwasser-Zulaufdruck zum Niederdruck-Wassererhitzer zu drosseln.

Dazu sind entsprechende Druckminderer an dem dann vorhandenen Ablaufkanal anzuschließen. Außerdem hat es sich gezeigt, daß dann, wenn Spül- und/oder Waschmaschinen an die Kaltwasser-Zulaufleitung angeschlossen sind, diese beim Schließen der dort verwendeten Magnetventile zu Druckstößen in der Kaltwasser-Zulaufleitung führen. Dadurch werden die empfindlichen Inneneinbauten der Ventileinheit stark belastet und manchmal beschädigt. Schließlich hat es sich gezeigt, daß die an sich ein leichtes Schwenken des Schwenkarmes erlaubenden Lippendichtungen bei höheren Innendrücken so stark verformt werden, daß der Dichtungsdruck den Schwenkarm sehr schwergängig werden läßt.

Sanitärarmaturen mit einem Durchflußkonstanthalter sind ebenfalls bekannt, siehe DE-A-38 26 235 oder DE-A-32 08 530.

Der Erfindung liegt nun die Aufgabe zugrunde, die bekannte, zuvor erläuterte Sanitärarmatur so auszugestalten und weiterzubilden, daß der schwenkbare Auslaufarm - Schwenkarm - nabhängig bzw. im wesentlichen unabhängig von der Stellung der Ventileinheit stets mit geringem Kraftaufwand schwenkbar ist und daß etwaig vorhandene Druckstöße nicht zu einer Beeinträchtigung oder Beschädigung der Ventileinheit führen können.

Die beanspruchte Sanitärarmatur ist nun dadurch gekennzeichnet, daß an der Wasseraustrittsseite der Ventileinheit, also im Ausströmkanal in Strömungsrichtung vor den Dichtungen und ggf. auch im Ablaufkanal ein Durchflußkonstanthalter angeordnet ist, daß der Durchflußkonstanthalter scheibenartig ausgeführt ist und einen axial verlaufenden ringförmigen Strömungskanal aufweist und daß der Durchflußkonstanthalter zusätlich zum ringförmigen Strömungskanal eine mittige Durlaßöffnung mit von der Anströmseite zur Abströmseite abnehmend abgestuftem Durchmesser aufweist. Der Durchflußkonstanthalter, der erfindungs- gemäß an der Wasseraustrittsseite der Ventileinheit, also im Ausströmkanal in Strömungsrichtung vor den Dichtringen und ggf. auch im Ablaufkanal, angeordnet ist, hält den Durchfluß weitgehend druckunabhängig weitgehend konstant, die Druckschwankungen auf derAbströmseite liegen jedenfalls in einem sehr engen Bereich. Das hat verschiedene Folgen. Zunächst kann jetzt ein Auslaufperlator verwendet werden, der einen sehr geringen Strömungswiderstand hat, also kaum mehr als Drosselstelle wirkt. Der Durchfluß wird unabhängig vom Zulaufdruck durch den Durchflußkonstanthalter konstant gehalten, und zwar insbesondere auch im unteren Druckbereich. in einem Ablaufkanal zu einem Niederdruck-Wassererhitzer eingebaut, wirkt der Durchflußkonstanthalter wie ein hier ohnehin erforderlicher Druckminderer. Durch das Abschalten von Magnetventilen von Spül- oder Waschmaschinen verursachte Druckschläge in der Kaltwasser-Zulaufleitung können über den Durchflußkonstanthalter, jedenfalls bei einer besonders geschickten konstruktiven Auslegung, weitgehend abgebaut werden, so daß die Ventileinheit von solchen Druckschlägen nicht mehr oder jedenfalls nicht mehr so stark beeinträchtigt wird. Schließlich, und das ist von besonderer Bedeutung, führt der an der Wasseraustritisseite der Ventileinheit, also am Anfang des Ausströmkanals angeordnete Durchflußkonstanthalter dazu, daß auch bei hohen Innendrücken die als Lippendichtungen ausgeführten Dichtringen keinem erhöhten Druck ausgesetzt werden. Auch bei hohen zulaufseitigen Drücken ist also der Schwenkarm einer entsprechend gestalteten Sanitärarmatur sehr leicht schwenkbar, unabhängig davon, welche Stellung nun die Ventileinheit hat, ob also drucklos oder mit Druck im System geschwenkt wird.

Bevorzugte Ausgestaltungen und Weiterbildungen der erfindungsgemäßen Sanitärarmatur sind in den abhängigen Ansprüchen beschrieben.

Im übrigen wird ein bevorzugtes Ausführungsbeispiel der Erfindung anhand der Zeichnung näher erläutert In der Zeichnung zeigt
- Fig. 1: in einer Seitenansicht, teilweise aufgeschnitten, ein Ausführungsbeispiel einer erfindungsgemäßen Sanitärarmatur mit einem Durchflußkonstanthalter an der Wasseraustrittsseite der Ventileinheit im Ausströmkanal,
- Fig. 2: den Durchflußkonstanthalter aus Fig. 1 im Schnitt, in einer vergrößerten Darstellung,
- Fig. 3: den Durchflußkonstanthalter aus Fig. 2 von der Abströmseite her gesehen, hier ist auch die Lage des Schnittes von Fig. 2 eingezeichnet, und
- Fig. 4: den Durchflußkonstanthalter aus Fig. 2 in einer Ansicht von der Anströmseite her gesehen.

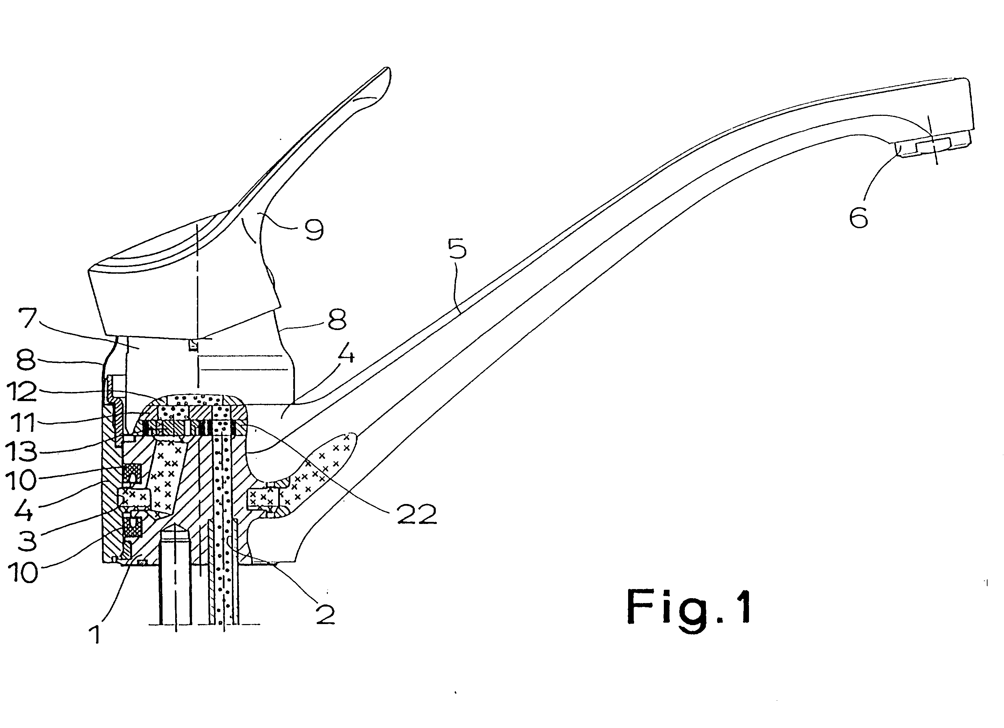

Die in Fig. 1 dargestellte Sanitärarmatur ist eine Einhebel-Einloch-Küchenbatterie. Die Erfindung ist aber nicht nur bei einer solchen Küchenbattede realisierbar, sondern generell bei allen Arten von Sanitärarmaturen entsprechenden Aufbaues. Mittels einer Befestigungsschraube ortsfest anbringbar ist ein Armaturenkörper 1, der wie üblich einen Zulaufkanal 2 und einen eingestochenen und schräg angeschlossenen Ausströmkanal 3 aufweist. Der Armaturenkörper 1 kann auch, hier jedoch nicht dargestellt, einen Ablaufkanal oder mehrere Ablaufkanäle aufweisen. Der Armaturenkörper 1 ist hier zylindrisch ausgeführt, da ihm eine aufgeschobene und ihm gegenüber schwenkbare Armaturenhülse 4 zugeordnet ist, die einen strömungstechnisch an den Ausströmkanal 3 angeschlossenen Auslaufarm 5 mit einem Auslaufmundstück 6 aufweist. Dabei hat das Auslaufmundstück 6 einen Auslaufperlator, das ist aber nicht zwingend. Im dargestellten Ausführungsbeispiel einer Einhebel-Einloch-Küchenbattede ist der Auslaufarm 5 als an der Armaturenhülse 4 angeordneter und mit der Armaturenhülse 4 schwenkbarer Schwenkarm ausgeführt.

Auf dem Armaturenkörper 1 angebracht ist eine Ventileinheit 7, die im hier dargestellten und bevorzugten Ausführungsbeispiel als Einhebel-Kartusche ausgeführt ist Die Ventileinheit 7 wird von einer an die Armaturenhülse 4 anschließenden Kappe 8 überfaßt, die ihrerseits von einer mit einem Bedienungshebel 9 einstückig ausgeführten Rosette überfaßt wird. Die Armaturenhülse 4 und die Kappe 8 sind in der linken Hälfte von Fig. 1 geöffnet dargestellt, die Ventileinheit 7 ist zusätzlich noch teilweise aufgeschnitten.

Im Bereich des Ausströmkanals 3 sind Dichtringe 10 angeordnet, die als Lippendichtungen ausgeführt sind.

In der Ventileinheit 7 erkennt man in dem Schnitt oben eine Kanalführungsscheibe 11 und darüber die übliche Steuerscheibe 12, die durch den Bedienungshebel 9 gegenüber der Kanalführungsscheibe 11 zwecks Steuerung der Wasserströmung hin und her bewegt werden kann.

Wesentlich für die Erfindung ist nun, daß an der Wasseraustrittseite der Ventileinheit 7, also im Ausströmkanal 3 in Strömungsrichtung vor den Dichtringen 10 und ggf. auch im Ablaufkanal, ein Durchflußkonstanthalter 13 angeordnet ist. Man erkennt hier den Durchflußkonstanthalter 13 am Anfang des Ausströmkanals 3, also unmittelbar unter der Kanalführungsscheibe 11. Was mit dem Durchflußkonstanthalter 13 erreichbar ist, ist im allgemeinen Teil der Beschreibung beschrieben worden, so daß darauf verwiesen werden darf. Ergänzend soll darauf hingewiesen werden, daß ein Durchflußkonstanthalter 13 mit entsprechendem Effekt natürlich auch in einem Ablaufkanal, der hier eben nicht dargestellt ist, angeordnet sein kann. Das kann beispielsweise ein Ablaufkanal zu einem Niederdruck-Wassererhitzer sein.

Wie eingangs schon erläutert worden ist, kann bei Einsatz eines entsprechenden Durchflußkonstanthalters 13 der Auflaufperlator ohne weiteres einen sehr geringen Strömungswiderstand aufweisen. Er wirkt dann praktisch nicht als Drosselstelle, der Durchfluß wird ja ohnehin durch den Durchflußkonstanthalter 13 konstant gehalten.

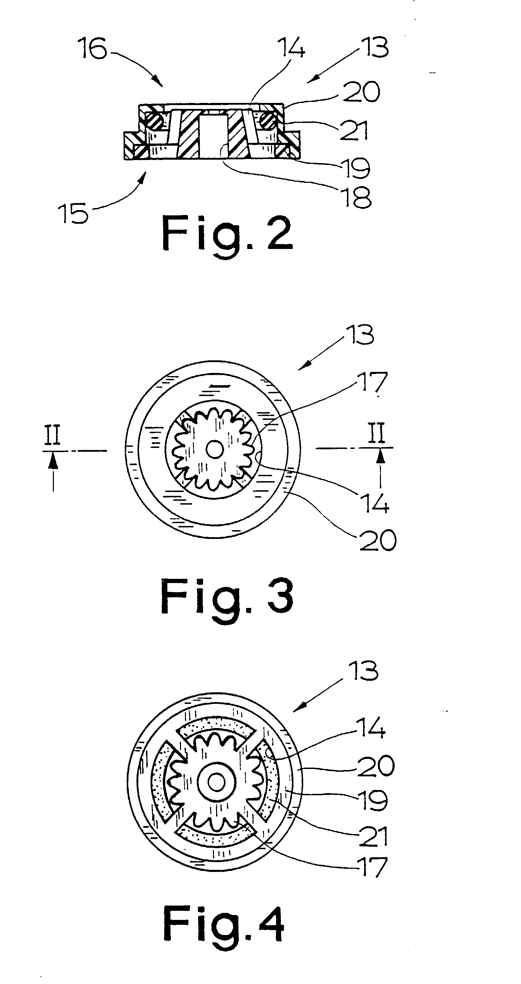

Die Fig. 2 bis 4 zeigen jetzt einen erfindungsgemäßen Durchflußkonstanthalter 13. Zunächst gilt hier, daß der Durchflußkonstanthalter 13 scheibenartig ausgeführt ist und einen axialverlaufenden, ringförmigen Strömungskanal 14 aufweist, wobei der Ringdurchmesser des Strömungskanals 14 von derAnströmseite 15 zur Abströmseite 16 hin abnimmt. Im dargestellten Ausführungsbeispiel ist die Konstanthaltung des Durchflusses dadurch möglich, daß der Strömungskanal 14 mit strömungslenkenden Einbauten 17 versehen und ist und die Einbauten 17 rosettenförmig gestaltet sind. Der Durchflußkonstanthalter 13 weist zusätzlich zum ringförmigen Strömungskanal 14 eine mittige Durchlaßöffnung 18, mit von der Anströmseite 15 zur Abströmseite 16 abnehmend abgestuften Durchmesser, auf. Die Durchlaßöffnung 18 wirkt normalerweise gegenüber der Strömung im Strömungskanal 14 eher ein wenig störend. Jedenfalls wird die Eigenschaft, den Durchfluß konstant zu halten, durch die mittige Durchlaßöffnung 18 ein wenig beeinträchtigt. Das ist aber nur ein quantitativ geringfügiger Einfluß. Demgegenüber hat die Durchlaßöffnung 18, insbesondere mit dem abgestuften Durchmesser, den positiven Effekt, daß Druckschläge in der Kaltwasser-Zulaufleitung im von der Durchlaßöffnung 18 gebildeten Puffervolumen so abgeschwächt werden, daß sie die Ventileinheit 7 nicht mehr beeinträchtigen. Der plötzlich ansteigende Druck kann sich in das Puffervolumen hin schnell abbauen, der Bereich der Durchlaßöffnung 18 mit geringerem Durchmesser dient dann der Entspannung des Puffervolumens. Im übrigen zeigen die Fig. 2 bis 4, daß der Durchflußkonstanthalter 13 aus zwei miteinander gekuppelten Scheiben 19, 20 mit einem dazwischen angeordneten Dichtring 21 besteht.

Konstruktiv ist die in den Fig. 2 bis 4 erkennbare Gestaltung des Durchflußkonstanthalters 13 besonders zweckmäßig, insbesondere wenn man diesen, wie dargestellt, aus Kunststoff ausführt.

Wie Fig. 1 schließlich erkennen läßt, ist die Konstruktion hier so gewählt, daß der Durchflußkonstanthalter 13 in die Ventileinheit 17 integriert und dort in einer eigenen Einbauscheibe 22 angeordnet ist Das entspricht der Grundkonzeption der hier vorgesehenen, bevorzugten Ventileinheit 7.

## Patentansprüche

1. Sanitärarmatur mit einem ortsfest anbringbaren, Zulaufkanäle (2), einen Ausströmkanal (3) und ggf. einen Ablaufkanal aufweisenden Armaturenkörper (1), mit einer auf den Armaturenkörper (1) aufgeschobenen und gegenüber dem Armaturenkörper (1) schwenkbaren Armaturenhülse (4), mit einem strömungstechnisch an den Ausströmkanal (3) angeschlossenen, an der Armaturenhülse (4) angeordneten und mit der Armaturenhülse (4) schwenkbaren Auslaufarm (5) - Schwenkarm - mit einem Auslaufmundstück (6) und einem Auslaufperlator am Auslaufmundstück (6) und mit einer auf dem Armaturenkörper (1) angebrachten, vorzugsweise als Einhebel-Kartusche ausgeführten Ventileinheit (7), wobei im Bereich des Ausströmkanals (3) zwischen dem Armaturenkörper (1) und der Armaturenhülse (4) als Lippendichtungen ausgeführte Dichtringe (10) angeordnet sind, **dadurch gekennzeichnet**, daß an der Wasseraustrittsseite der Ventileinheit (7), also im Ausströmkanal (3) in Strömungsrichtung vor den Dichtringen (10) und ggf. auch im Ablaufkanal, ein Durchflußkonstanthalter (13) angeordnet ist, daß der Durchflußkonstanthalter (13) scheibenartig ausgeführt ist und einen axialverlaufenden ringförmigen Strömungskanal (14) aufweist und daß der Durchflußkonstanthalter (13) zusätzlich zum ringförmigen Strömungskanal (14) eine mittige Durchlaßöffnung (18) mit von der Anströmseite (15) zur Abströmseite (16) abnehmend abgestuftem Durchmesser aufweist.

2. Sanitärarmatur nach Anspruch 1, dadurch gekennzeichnet, daß der Auslaufperlator auf einen sehr geringen Strömungswiderstand ausgelegt ist, also praktisch nicht als Drosselstelle wirkt.

3. Sanitärarmatur nach Anspruch 1 oder 2, dadurch gekennzeichnet, daß der Ringdurchmesser des Strömungskanals (14) von der Anströmseite (15) zur Abströmseite (16) hin abnimmt.

4. Sanitärarmatur nach einem der Ansprüche 1 bis 3, dadurch gekennzeichnet, daß der Strömungskanal (14) mit strömungslenkenden Einbauten (17) versehen ist und vorzugsweise die Einbauten (17) rosettenförmig gestaltet sind.

5. Sanitärarmatur nach einem der Ansprüche 1 bis 4, dadurch gekennzeichnet, daß der Durchflußkonstanthalter (13) aus zwei miteinander gekuppelten Scheiben (19, 20), vorzugsweise mit dazwischen angeordneten Dichtring (21), besteht.

6. Sanitärarmatur nach einem der Ansprüche 1 bis 5, dadurch gekennzeichnet, daß der Durchflußkonstanthalter (13) in die Ventileinheit (17) integriert und dort vorzugsweise in einer eigenen Einbauscheibe (22) angeordnet ist.

## Claims

1. A sanitary fitting with a fitting body (1) which can be mounted in a fixed position and which comprises supply channels (2), a discharge channel (3) and optionally a run-off channel, with a fitting sleeve (4) which is slid on to the fitting body (1) and can swivel in relation to the fitting body (1), with a delivery arm (5) - a swivel arm - which is in fluidic connection with the discharge channel (3), which is disposed on the fitting sleeve (4) and which can swivel with the fitting sleeve (4), with a delivery nozzle (6) and with a flow-modifier on the delivery nozzle (6), and with a valve unit (7) which is preferably constructed as a single-lever cartridge mounted on the fitting body (1), wherein sealing rings (10) constructed as lip seals are disposed in the region of the discharge channel (3) between the fitting body (1) and the fitting sleeve (4), characterised in that a flow stabiliser (13) is disposed on the water outlet side of the valve unit (7), namely in the discharge channel (3) in front of the sealing rings (10) in the direction of flow, and optionally also in the run-off channel, that the flow stabiliser (13) is constructed in the form of a disc and has an annular flow channel (14) extending axially, and that in addition to the annular flow channel (14) the flow stabiliser (13) has a central passage opening (18) with a graduated diameter which decreases from the inflow side (15) to the outflow side (16).

2. A sanitary fitting according to claim 1, characterised in that the delivery flow-modifier is designed for a very flow resistance to flow, and therefore has practically no effect as a throttle point.

3. A sanitary fitting according to claim 1 or 2, characterised in that the annulus diameter of the flow channel (14) decreases from the inflow side (15) to the outflow side (16).

4. A sanitary fitting according to claim 3, characterised in that the flow channel (14) is provided with flow-deflecting inserts (17), and the inserts (17) are preferably fashioned in the shape of rosettes.

5. A sanitary fitting according to claim 1 to 4, characterised in that the flow stabiliser (13) consists of two discs (19, 20) which are coupled to each other, preferably with a sealing ring (21) disposed therebetween.

6. A sanitary fitting according to any one of claims 1 to 5, characterised in that the flow stabiliser (13) is integrated in the valve unit (7) and is preferably disposed there in a separate insert disc (22).

## Revendications

1. Appareil de robinetterie sanitaire comporant un canal d'arrivée (1) pouvant être monté à poste fixe, un canal de sortie (3) et éventuellement un canal d'écolement, une douille orientable (4) enfilée sur le corps (1) de l'appareil et pouvant tourner par rapport au corps (1), un bras d'écoulement orientable (5) fixé à la douille orientable (4) pouvant tourner avec celle-ci et raccordé au canal de sortie (3), ce bras étant pourvu d'un bec d'écoulement (6) équipé d'un atomiseur du type Perlator, l'appareil comportant également un bloc-robinet unitaire (7) monté sur le corps (1) de l'appareil et constitué de préférence par une cartouche commandée par une manette unique, des joints annulaires (10) a lèvres d'étanchéité étant prévus au voisinage du canal de sortie (3) entre le corps (1) de l'appareil et la douille orientable (4) montée sur le corps, caractérisé en ce qu'il comporte un régulateur de débit constant (1) monté du côté de la sortie de l'eau du bloc unitaire de robinet (7), et donc dans le canal de sortie (3) en amont des joints annulaires (10) dans le sens de l'écoulement, et éventuellement aussi dans le canal d'écoulement, que le régulateur de débit constant (13) est réalisé en forme de disque et comporte un canal d'écoulement annulaire (14) orienté dans le sens axial, et que le régulateur de débit constant (13), outre le canal d'écoulement annulaire (14), comporte un trou de passage central (18) dont le diamètre va en diminuant par paliers à partir de la face d'entrée (15) vers la face de sortie (16).

2. Appareil de robinetterie sanitaire selon la revendecation 1, caractérisé en ce que l'atomiseur du type Perlator est prévu pour offir une résistance à l'écoulement très faible, et ne joue donc pas pratiquement le rôle d'un orifice d'étranglement.

3. Appareil de robinetterie sanitaire selon la revendecation 1 ou 2, caractérisé en ce que le diamètre annulaire du canal d'écoulement (14) va en diminuant à partir de la face d'entrée (15) vers la face de sortie (14).

4. Appareil de robinetterie sanitaire selon la revendecation 3, caractérisé en ce que le canal d'écoulement (14) est pourvu d'organes de régulation (17) montés dans le canal, ces organes de régulation (17) étant de préférence en forme de rosace.

5. Appareil de robinetterie sanitaire selon l'une des revendications 1 à 4, charactérisé en ce que le régulateur de débit constant (13) est constitué par deux disques accouplés (19, 20), avec de préference un joint annulaire (21) interposé.

6. Appareil de robinetterie sanitaire selon l'une des revendications 1 à 5, charactérisé en ce que le régulateur de débit constant (13) est incorporé dans le bloc unitaire de robinet (7), et en ce qu'il est constitué de préférence par un élément en forme de disque (22) monté dans ce bloc.
